Europäisches Patentamt

European Patent Office

Office européen des brevets

(19)

(11) Publication number: **0 253 140**
**A2**

(12) # EUROPEAN PATENT APPLICATION

(21) Application number: **87108579.1**

(22) Date of filing: **14.06.87**

(51) Int. Cl.4: **G01M 3/32**

(30) Priority: **10.07.86 JP 163131/86**

(43) Date of publication of application:
**20.01.88 Bulletin 88/03**

(84) Designated Contracting States:
**BE DE FR GB**

(71) Applicant: **Ishizaki Press Kogyo Co., Ltd.**
**98-2 Morimoto 1-chome,**
**Itami-shi Hyogo-ken(JP)**

(72) Inventor: **Ishizaki, Morio c/o Ishizaki Press**
**Kogyo Co., Ltd.**
**98-2 Morimoto 1-chome**
**Itami-shi Hyogo-ken(JP)**

(74) Representative: **Prüfer, Lutz H., Dipl.-Phys.**
**Harthauser Strasse 25d**
**D-8000 München 90(DE)**

(54) **Battery can hole detecting apparatus.**

(57) A battery can hole detecting apparatus detects whether or not battery cans formed by a drawing operation are defective and leak because a can has a hole. Battery cans (3) which are continuously fed from the press (12) are held and conveyed at predetermined intervals on a conveyor chain (4) and then, are placed on positioning recesses (10) of a rotor (15) and thereby carried to a first (13) or second discharge port (14). During this movement, air is introduced into the inner space of such battery can to detect whether or not the battery can is leaking according to whether or not the pressure of the introduced air reaches a predetermined value. Battery cans which are not defective are discharged at a first discharge port, while battery cans which are defective are discharged at a second discharge port.

FIG.1

## Battery Can Hole Detecting Apparatus

This invention relates to a battery can hole detecting apparatus for examining whether or not battery cans formed by drawing operation with a press machine are holed.

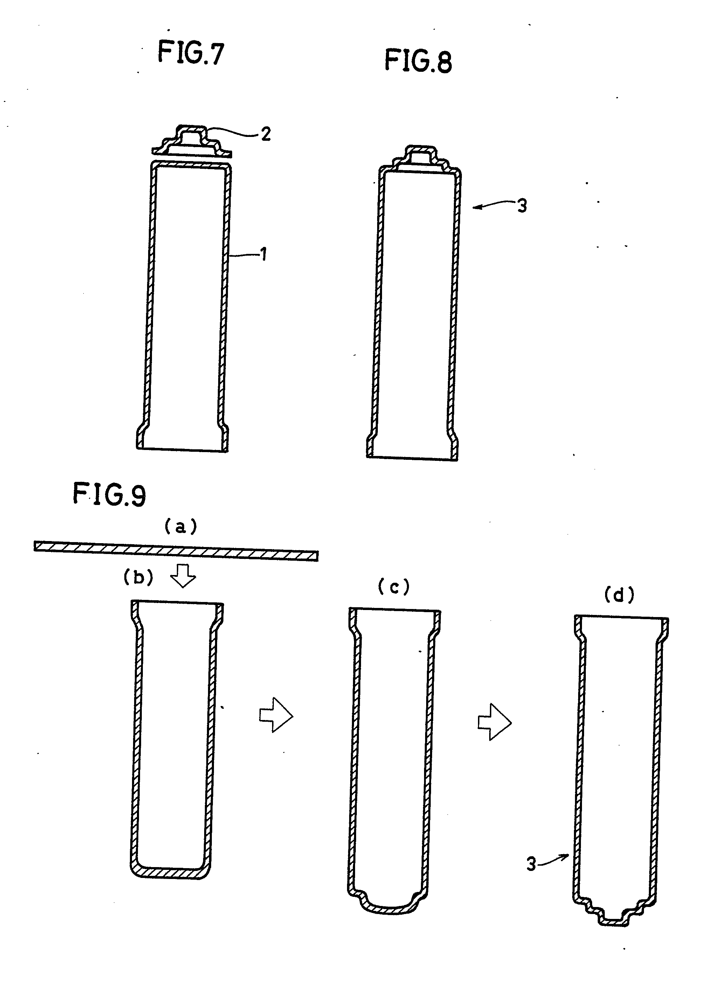

Fig. 7 shows an example of a battery can which has heretofore been in use. The two parts shown therein are members which constitute the anode section of a battery. One part 1 is a cylindrical member having a flat closed end and an open at the other end. The other part 2 constitutes an anode terminal to be fixedly attached to the closed end surface of the cylindrical member 1. In the example shown in Fig. 7, the two parts 1 and 2 are used to constitute the anode section of a battery. In recent years, however, in order to reduce the number of parts to hereby improve workability and reduce cost and to make effective use of the space in the anode terminal member 2, there has been developed a one-piece battery can as shown in Fig. 8.

The battery can 3 shown in Fig. 8 is obtained by drawing a sheet material on a press machine. The battery can 3 constitutes the anode section of a battery, but it differs from the example shown in Fig. 7 in that it is formed of a single member. And the closed end has a stack of projections in two-step form, constituting the anode terminal.

The battery can 3 shown in Fig. 8 is suitable for mass production but, on the other hand, it offers problems to be presently described. Fig. 9 shows the process for production of the battery can 3. Usually, the processing steps shown therein are performed on a single press machine. To make the battery can 3 of the shape shown in Fig. 8, drawing operation is performed roughly in three stages. At the first stage, a sheet material shown at (a) is drawn to a shape shown at (b). The member shown at (b) has its closed end made flat. From this state is performed the second stage of drawing to provide a shape shown at (c). As shown, at this stage, the closed end has a single projection. And the final stage of drawing is then performed to provide a shape shown at (d), that is, the shape shown in Fig. 8. That is, finally the battery can 3 has a shape such that it has a stack of two projections. These projections, of course, constitute the anode terminal of a battery.

As described above, to obtain the battery can 3 of the shape shown in Fig. 8, a substantial amount of drawing has to be performed. This means rather a radical drawing operation on the blank. As constituted from the present level of press technology, it would be difficult to produce battery cans by deep drawing with high accuracy without involving any rejects. In other words, some of the deep drawn battery cans 3, though very few, may have holes resulting from deep drawing. In this connection, it is to be understood that the word "holes" as used herein refers not only to literal holes but also to breaks, cracks, etc. Such holes often form in the corners of the projections on the closed end of the battery can 3. If a battery can, while retaining holes, is assembled as a final product, a electrolytic solution would leak through the holes, thereby making a product no good for use. Therefore, it is necessary to withdraw holed battery cans in the course of production of battery cans 3 to ensure that defective products never appear on the market.

However, the size of holes resulting from drawing is very small and, moreover, oil has adhered to the products. As a result, holes can hardly be found visually. Further, the number of battery cans formed by drawing is so large that it is practically impossible for the operator to visually inspect battery cans one by one to find holes therein.

For this reason, there is no way but a mechanical one to examine whether or not battery cans are holed. In order to improve workability and increase operating efficiency in the production process, it is preferable to examine battery cans as they are drawn on a press machine and delivered therefrom. To provide operative association between the press machine and the hole detecting mechanism, it could be contemplated to operate the hole detecting mechanism with the same cycle time as that of the press machine. However, in press machines, the cycle time required for drawing one battery can is very short. For example, it is 1 second per unit. In this case, battery cans will be fed to the hole detecting mechanism at a rate of one unit per second, but it is difficult to make a check in one second of whether or not a battery can is holed.

For this reason, usually, the hole detecting mechanism would be separated form the press machine so as to make battery can hole detection in a line separate from the production line. However, to improve workability and increase operating efficiency, it is desirable to make continuous detection of holes in battery cans as they successively come out of a press machine.

Accordingly, an object of this invention is to provide a battery can hole detecting apparatus by which continuous and reliable detection of whether or not battery cans drawn on a press machine are holded can be made as they come out of the press.

A battery can hole detecting apparatus according to this invention, which examines whether or not battery cans formed by press drawing are defective due to perforations, comprises:

(a) a conveyor chain which holds, at predetermined intervals, battery cans continuously fed from the press and conveys them,

(b) a rotor having said conveyor chain entrained therearound and adapted to receive battery cans from said conveyor chain and carry them on its outer surface, by its own rotation, to a first discharge port or a second discharge port subsequent thereto which are disposed around its periphery,

(c) a plurality of positioning recesses formed in said rotor around its entire outer peripheral surface at a pitch equal to the battery can holding spacing of said conveyor chain for receiving battery cans fed onto the outer peripheral surface of said rotor,

(d) a cylinder opposed to each said positioning recess for pressing the closed end of a battery can positioned by said positioning recess,

(e) an insert portion opposed to each said positioning recess and adapted to fit in the open end of a battery can positioned by said positioning recess so as to seal the inner space of the battery can,

(f) an air inlet port extending through said insert portion,

(g) air introducing means for introducing air from said air inlet port into the inner space of the battery can fixed by said cylinder and said insert portion,

(h) pressure switches each adapted to be actuated when the pressure of the air introduced into the inner space of a battery can exceeds a predetermined value, and

(i) clamp control means adapted to cancel the pressing of said cylinder against the closed end of a battery can when the latter reaches said first discharge port if said pressure switch has been actuated or to cancel the pressing of said cylinder against the closed end of the battery can and to feed air from said air inlet port into the inner space of the battery can when the latter reaches said second discharge port if said pressure switch has not been actuated.

Battery cans drawn on a press are subsequently carried by the conveyor chain and fed onto the outer surface of the rotor. The battery cans thus fed are successively positioned on the outer peripheral surface of the rotor by the positioning recesses and then, as clamped by the cylinders and insert portions, they are carried to the first discharge port or the second discharge port subsequent thereto. As the battery cans are conveyed on the outer surface of the rotor, air is introduced into the battery cans. If such battery can has no hole, the pressure of the air introduced into the inner space of the battery can exceeds a predetermined value, with the result that the pressure switch is actuated. In this case, the pressing of the cylinder against the closed end of the battery can is cancelled, with the result that the battery can is released from the insert portion and discharged into the first discharge port by the action of the internal pressure of said battery can. On the other hand, if the battery can has a hole or holes, the pressure of the air introduced into the inner space of the battery can does not reach the predetermined value, so that the pressure switch will not be actuated. In this case, as soon as the battery can reaches the second discharge port, the pressing of the cylinder is cancelled and air is blown off from the air inlet port. As a result, the battery can is released from the insert portion and discharged into the second discharge port.

These objects and other objects, features, aspects and advantages of the present invention will become more apparent from the following detailed description of the present invention when taken in conjunction with the accompanying drawings.

Fig. 1 is a side view of the principal portion of an embodiment of this invention;

Fig. 2 is a enlarged side view of connecting portions of a conveyor chain 4 with a rotor 5 shown in Fig. 1;

Fig. 3 is a top plan view of the principal portion of the embodiment of this invention;

Fig. 4 is a view showing a pneumatic sequence circuit and a contact circuit related thereto which are used in the embodiment of this invention;

Figs. 5 and 6 are sequence charts for the embodiment of this invention, Fig. 5 showing operating conditions where a battery can is not holed and Fig. 6 showing operating conditions where a battery can is holed;

Fig. 7 is a sectional view showing an example of a conventional battery can; and

Fig. 8 is a sectional view of an example of an improved battery can;

Fig. 9 is a view schematically showing the process for producing the battery can of Fig. 8.

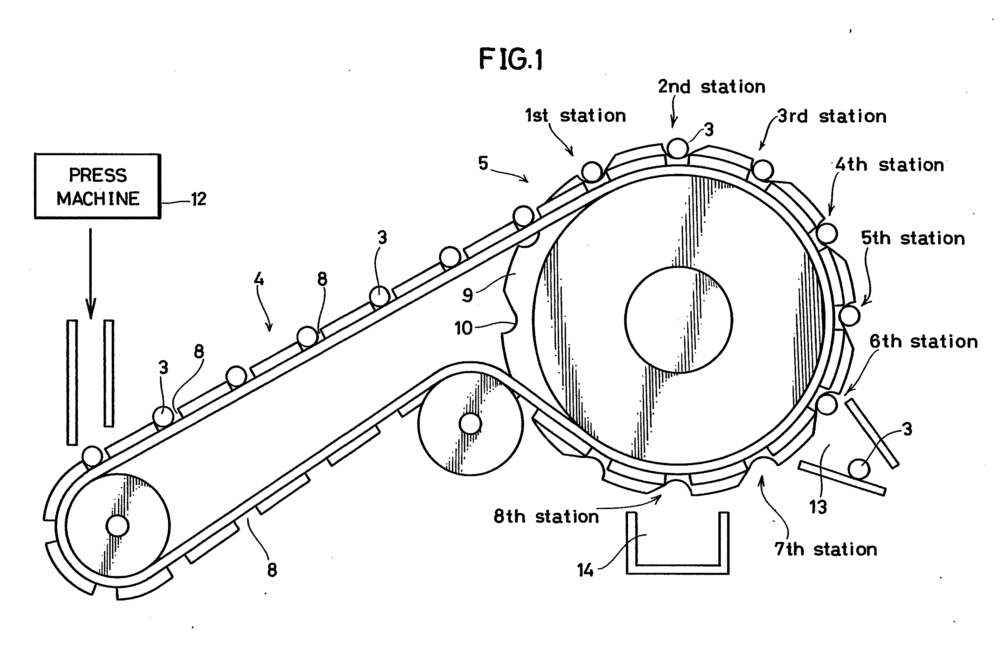

Figs. 1, 2 and 3 schematically show the principal portion of an embodiment of the invention. The hole detecting apparatus comprises a conveyor chain 4, and a rotor 5. As shown in Fig. 1, the conveyor chain 4 holds battery cans 3, at predetermined intervals, which are continuously fed thereto from a press 12 and conveys them. The conveyor chain 4 is entrained around the rotor 5. Therefore, as the rotor 5 is rotatively driven, the conveyor chain 4 is also driven in operative association therewith. The rotor 5 receives battery cans 3 from the conveyor chain 4 and, by its own rotation, conveys said battery cans 3, placed on the outer surface thereof, to a first discharge port 13 or a second discharge port 14 subsequent thereto which are disposed around the rotor.

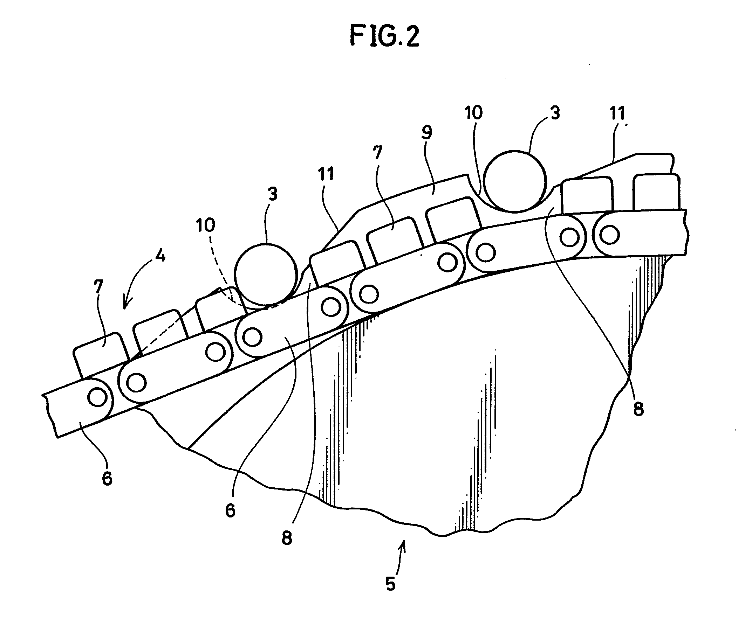

Fig. 2 is an enlarged view of the connecting region between the roller chain 4 and the rotor 5. As shown, the conveyor chain 4 has a plurality of link plates 6 turnably connected together. Each link plate 6 has a perpendicular plate 7 fixed thereto which extends perpendicular to the direction of travel thereof. However, there are locations at fixed intervals where such perpendicular plate is not provided. Such portions are shown as gap portions 8 in Figs. 1 and 2. As shown in Fig. 1, battery cans 3 fed from the press 12 are received in the gap portions 8 of the conveyor chain 4 and conveyed.

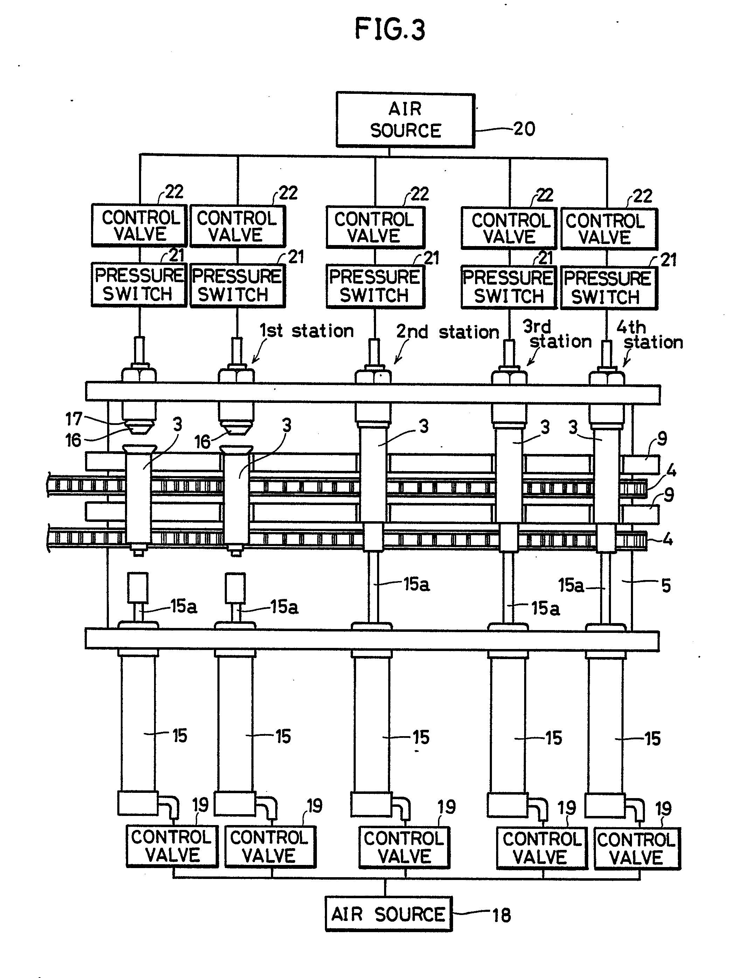

As shown in Fig. 3, the rotor 5 is formed on its outer peripheral surface with outwardly projecting flange portions 9. The flange portions 9 extend around the entire outer peripheral surface along the conveyor chain 4. As shown in Figs. 1 and 2, the outer peripheral surfaces of the flange portions 9 are formed with a plurality of positioning recesses 10 at the same pitch as that of the gap portions 8 of the conveyor chain 4. Battery cans 3 conveyed by the conveyor chain 4 are received in the positioning recesses 10 of the rotor 5 and thereby positioned. In the connecting region between the conveyor chain 4 and the rotor 5 it is so arranged that the position of each gap portion 8 corresponds to that of the associated positioning recess 10. Therefore, battery cans 3 conveyed by the conveyor chain 4 are smoothly received in the positioning recesses 10 of the rotor 5. In addition, as shown in Fig. 2, the outer peripheral surfaces of the flange portions 9 on the rotor 5 are formed with inclined guide surfaces 11 each continuous with the associated positioning recess 10. The inclined guide surfaces 11 serve to guide battery cans 3 to facilitate their transfer from the conveyor chain 4 to the positioning recesses 10 of the rotor 5. The bottoms of the positioning recesses 10 are positioned above the level of the upper surfaces of the link plates 6 of the conveyor chain 4. Thus, battery cans 3 can be positively released from the roller chain 4 and firmly held in the positioning recesses 10.

Corresponding to the positioning recesses 10 of the rotor 5, clamp means are provided for fixing positioned battery cans 3 to prevent them from moving relative to rotor. The number of said clamp means is the same as the number of positioning recesses 10 forming the positioning means. In this embodiment, each clamp means, as shown in Fig. 3, comprises a cylinder 15 for pushing the closed end of a battery can 3, and an insert portion 16 adapted to fit in the open end of the battery can 3 so as to seal the inner space of the battery can.

The cylinders 15 and insert portions 16 are rotated with the rotation of the rotor 5. Preferably, each insert portion 16 has an O-ring 17 fitted thereon to improve the quality of sealing of the inner space of the battery can. The cylinders 15 are air cylinders adapted to be operated by air fed thereto from an air source 18. Further, as shown in Fig. 3, solenoid control valves 19 are provided, each disposed in an air circuit connecting the air source 18 and each cylinder 15. Each control valve 19 normally cuts off the circuit but when its solenoid is energized it is actuated to feed air from the air source 18 to the cylinder 15. When air is being fed to the cylinder 15, the piston 15a advances to push and clamp a battery can 3.

Each insert portion 16 is formed with an air inlet port extending therethrough. Air from an air source 20 is introduced into the inner space of the clamped battery can 3 via said air inlet port. Further, as shown, disposed in an air pressure circuit connecting the air source 20 and each insert portion 16 are a pressure switch 21 and a solenoid control valve 22. Each control valve 22 normally cuts off the air pressure circuit but when its solenoid is energized it completes the circuit to introduce air from the air source 20 into the inner space of the battery can 3. Each pressure switch 21 is adapted to be actuated when the pressure of air introduced into the inner space of the battery can 3 reaches a predetermined value. If the battery can 3 is holed, the pressure of air introduced into the inner space of the battery 3 would not reach the predetermined value. In this case, the pressure switch 21 will not be actuated.

Referring to Fig. 1, battery cans 3 continuously fed onto the outer surface of the rotor 5 are moved with the rotation of the rotor 5 and during this movement a check is made of whether or not a battery can is holed. If it is not holed, the battery can 3 will be released from the clamp thereon at a first discharge port 13. On the other hand, if it is holed, the battery can 3 will be released from the clamp thereon at a second discharge port 14. In Fig. 1, first through eighth stations are shown, these stations serving as follows.

First station:

Battery cans 3 fed in through a conveyor chain 4 are received in the positioning recesses 10 of the rotating rotor 5 and positioned therein.

## Second station:

The solenoid of the control valve 19 (Fig. 3) is energized, so that the piston 15a of the cylinder 15 is advanced to thereby clamp the battery can 3.

## Third station:

The solenoid of the control valve 22 (Fig. 3) is energized to introduce air into the inner space of the battery can 3.

## Fourth station:

If the pressure of air introduced into the inner space of a battery can 3 is not less than a predetermined value, the corresponding pressure switch 21 will be actuated. However, if the air pressure is less than the predetermined value, the corresponding pressure switch 21 will not be actuated.

## Fifth station:

This station gives idle-time.

## Sixth station:

If a battery can 3 has not any hole, the clamp on the battery can 3 is removed at this station. In other words, the pressing of the cylinder 15 against the closed end of the battery can 3 is cancelled. As a result, the battery can 3 is released from the insert portion 16 by the action of the internal pressure (high pressure) of the battery can 3 and discharged into the first discharge port 13. Further, at this station, air is blown from outside against the battery can 3. In this way, the battery can 3 having the clamp thereon removed is reliably discharged into the first discharge port 13. However, if the battery can 3 has a hole or holes, the clamp on the battery can 3 will not be removed at this station. Thus, such battery can 3 is not discharged here and it is moved to another station to be described below.

## Seventh station:

This station gives idle-time.

## Eighth station:

The clamp on a holed battery can 3 is removed. Substantially simultaneously therewith, the air inlet port formed in the insert portion 16 blows off air to separate the battery can 3 from the rotor 5.

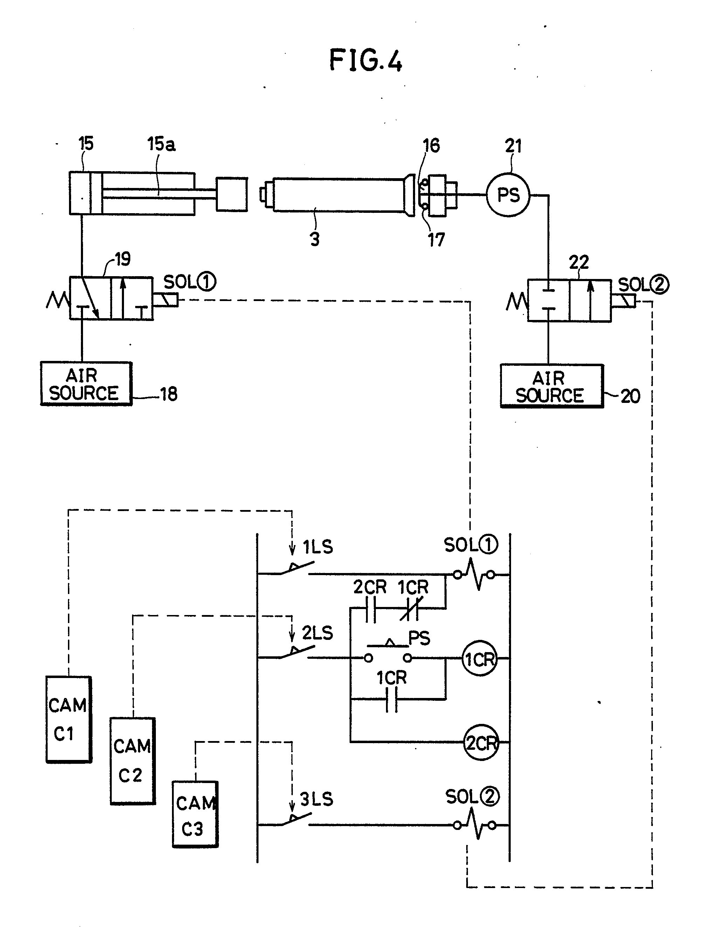

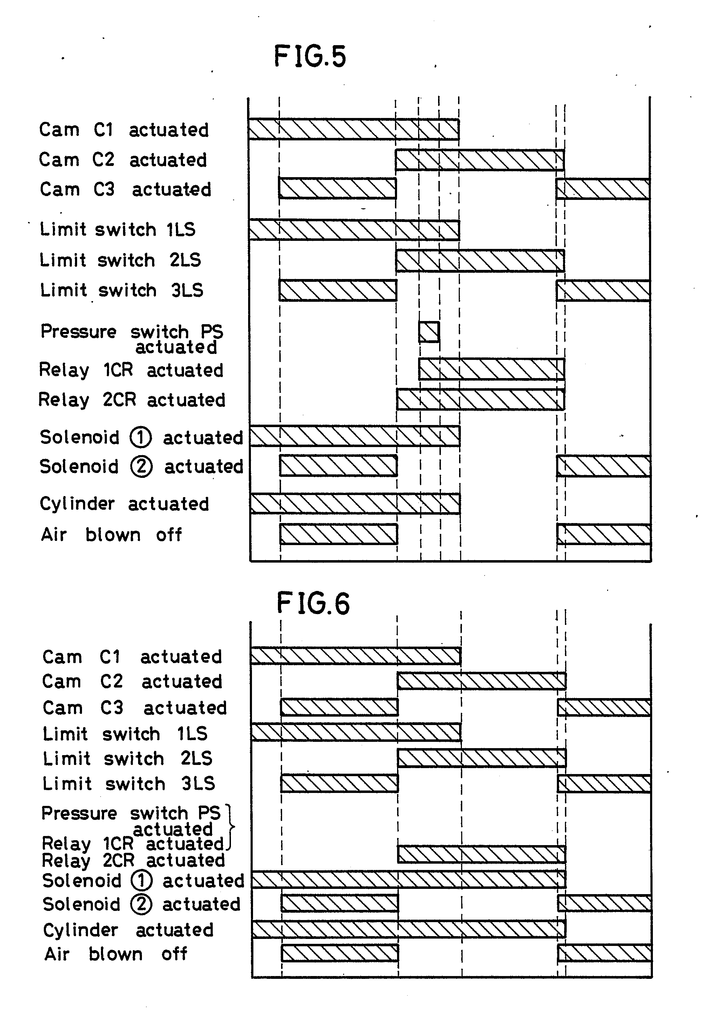

As can be understood from the above description of operation, the hole detecting apparatus has clamp control means which operates in such a manner that if a pressure switch 21 has been actuated, the pressing by the cylinder 15 against the closed end of a battery can 3 is removed when the battery can 3 reaches the first discharge port 13 and if it has not been actuated the pressing by the cylinder 15 is removed and air is introduced into the inner space of the battery can 3 through the air inlet port when the battery can 3 reaches the second discharge port 14. The details of the control means will now be described using Figs. 4 through 6. In Fig. 4, a pneumatic sequence circuit and a contact circuit related thereto are shown. In Figs. 5 and 6, sequence charts are shown. The sequence chart of Fig. 5 illustrates operating conditions where a battery can 3 is not holed, and Fig. 6 illustrates operating conditions where a battery can 3 is holed.

First, using Figs. 4 and 5, an operation which takes place when a battery can 3 is not holed will be described. The rotor 5 is provided with three cams C1, C2 and C3 associated with the respective clamp control means. As the rotor 5 continues rotation after a battery can 3 has been positioned at the first station, the cam C actuates to close a limit switch 1LS, whereupon the solenoid SOL ① of the control valve 19 is energized, introducing air from the air source 18 into the associated cylinder 15 to advance the piston 15a. This is the action that takes place at the second station, clamping the battery can 3.

As the rotor 5 continues rotation, the cam C3 actuates to close a limit switch 3LS. Thereupon, the solenoid SOL ② of the control valve 22 is energized. As a result, the position of the control valve 22 is shifted to introduce air from the air source 20 into the inner space of the battery can 3 via the insert portion 16. This is the action that takes place at the third station. The solenoid SOL ② of the control valve 22 remains energized while the cam C3 is actuating.

As the rotor 5 further rotates, the cam C2 actuates to close a limit switch 2LS. If the battery can 3 is not holded, the pressure of air introduced into the battery can 3 reaches a value equal to or greater than a predetermined value, so that the pressure switch PS is closed. As a result, it energizes the coil 1CR of the relay. With this energization, the self-holding a-contact (normally open) 1CR closed, while the b-contact (normally closed) 1CR opens. It is to be noted that whenever the limit switch 2LS closed, the coil 2CR of the relay is energized to close the a-contact 2CR irrespective of the actuation of the pressure switch PS. This is the action that takes place at the fourth station. Since the actuation of the pressure switch PS results in opening the b-contact 1CR, the solenoid SOL ① of the control valve 19 becomes independent of the limit switch 2LS. Thus, it follows that the solenoid SOL ① of the control valve 19 remains energized during the time the cam C1 is actuating. In other words, during the time the cam C1 is actuating, the piston 15a of the cylinder 15 is pressing the battery can 3. Therefore, if it is so arranged that the actuation of the cam C1 is cancelled when the rotor 5 rotates to the sixth station, then at this point of time the clamp on the battery can 3 can be removed.

Next, using Figs. 4 and 6, an operation which takes place when a battery can 3 is holed will be described. In the case where a battery can 3 is holed, the pressure of air introduced into the inner space of the battery can 3 does not reach the predetermined value. As a result, at the fourth station, the pressure switch does not actuate. Thus, the coil 1CR of the relay is not energized, with the b-contact 1CR remaining closed. On the other hand, when the cam C2 actuates to close the limit switch 2LS, the coil 2CR is energized to close the a-contact 2CR. Therefore, the solenoid SOL ① of the control valve 19 remains energized during the time the cam C1 is actuating plus the time the cam C2 is actuating. Therefore, if it is so arranged that the actuation of the cam C2 is cancelled at the eighth station, then the clamp on the battery can 3 is removed not at the sixth station but at the eighth station. In addition, at the eighth station the cam C3 actuates again and hence air is blown off from the air inlet port formed in the insert portion 16. The blowing force of the air discharges the battery can 3 into the second discharge port 14.

In this manner, holed, defective battery cans are reliably separated from non-defectives and withdrawn.

The embodiment described above consists in performing positioning at the first station, performing clamping at the second station, performing the blowing of air at the third station, and performing pressure detection at the fourth station. However, the invention is not limited thereto; the aforesaid actions may be performed at any stations on the way from the first station to the discharge port. For example, if time permits, clamping, air blowing, and pressure detection may be performed at the second station.

According to the present invention, the following merits can be attained.

(1) Since battery cans 3 are moved with the rotation of the rotor 5 and whether or not the battery cans are holed is detected during their movement, a sufficient detection time can be assigned to each battery can. For example, even if battery cans 3 are fed to the rotor 5 at a rate of 1 second per unit, 5 seconds will be available for hole detection if it takes 5 seconds for each battery can to travel from the first station to the battery can discharge port. Therefore, according to the invention, even if the press has a very short cycle time, the detection of defective cans can be easily made in a continuous operation.

(2) Since the conveyor chain 4 for holding battery cans 3, at predetermined intervals, which are continuously fed form the press is entrained around the rotor 5, the overall drive mechanism is simplified. In other words, since the conveyor chain 4 is driven by the rotative driving force of the rotor 5, there is no need to provide a separate drive mechanism for the conveyor chain. Further, the transfer of battery cans from the roller chain 4 to the rotor 5 is smooth, and there is no possibility of a battery can 3 stagnating therebetween.

(3) Since the first discharge port 13 for receiving non-defectives and the second discharge port 14 for receiving defectives are disposed around the periphery of the rotor 5, there is an advantage of space saving.

(4) According to the invention, there is no need to provide a special ejector means for discharging cans. That is, the clamp means has the function of ejector means as well. If a battery can 3 is perfect, the pressing of the cylinder 15 against the closed end of the battery can 3 is cancelled when the battery can 3 reaches the first discharge port 13. Therefore, the battery can 3 is released from the insert portion 16 and discharged into the first discharge port 13 by the action of the internal pressure of said battery can 3. If the battery can 3 is defective, the pressing of the cylinder 15 is cancelled when the battery can 3 reaches the second discharge port 14. Since the internal pressure of a battery can which is defective is low, this battery can cannot be released even when the pressing of the cylinder 15 is removed. For this reason, air is blown from the air inlet port to positively release the battery can 3 from the insert portion 16 for discharge into the second discharge port 14.

Perfect battery cans are discharged into the first discharge port 13 by utilizing the internal pressure thereof. If a battery can has a hole, crack, break or the like, its internal pressure is not high. In the case where the pressure switch or other port malfunctions, leading to a defective being misjudged to be a non-defective, the pressing of the cylinder 15 is cancelled when the battery can 3 reaches the first discharge port 13. However, since the internal pressure of the defective battery can is low, this battery can will not be discharged at the first discharge port 13. In this way, defectives are reliably sorted out from non-defectives by the double-check function.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A battery can hole detecting apparatus which examines whether or not battery cans are defective due to perforations, comprises:

a conveyor chain (4) which holds, at predetermined intervals, battery cans (3) continuously fed from the press (12) and conveys them,

a rotor (5) having said conveyor chain (4) entrained therearound and adapted to receive battery cans (3) from said conveyor chain (4) and carry them on its outer surface, by its own rotation, to a first discharge port (13) or a second discharge port (14) subsequent thereto which are disposed around its periphery,

a plurality of positioning recesses (10) formed in said rotor (5) around its entire outer peripheral surface at a pitch equal to the battery can holding spacing of said conveyor chain (4) for receiving battery cans (3) fed onto the outer peripheral surface of said rotor (5),

a device (15) opposed to each said positioning recess (10) for pressing the closed end of a battery can (3) positioned by said positioning recess (10),

an insert portion (16) opposed to each said positioning recess (10) and adapted to fit in the open end of a battery can (3) positioned by said positioning recess (10) so as to seal the inner space of the battery can (3),

an air inlet port extending through said insert portion (16),

air introducing means for introducing air from said air inlet port into the inner space of the battery can (3) fixed by said device (15) and said insert portion (16),

pressure switches (21) each adapted to be actuated when the pressure of the air introduced into the inner space of a battery can (3) exceeds a predetermined value, and

clamp control means adapted to cancel the pressing of said device (15) against the closed end of a battery can (3) when the latter reaches said first discharge port (13) if said pressure, switch (21) has been actuated or to cancel the pressing of said device (15) against the closed end of the battery can (3) and to feed air from said air inlet port into the inner space of the battery can (3) when the latter reaches said second discharge port if said pressure switch has not been actuated.

2. A battery can hole detecting apparatus as set forth in claim 1, wherein said clamp control means comprise cam means responsive to rotation of said rotor, and switching means responsive to said cam means for releasing a defective can to said second discharge port (14).

# FIG.1

PRESS MACHINE —12

1st station
2nd station
3rd station
4th station
5th station
6th station
7th station
8th station

0 253 140

# FIG.2

0 253 140

FIG.3

# FIG.4

# FIG.5

| | |
|---|---|
| Cam C1 actuated | |
| Cam C2 actuated | |
| Cam C3 actuated | |
| Limit switch 1LS | |
| Limit switch 2LS | |
| Limit switch 3LS | |
| Pressure switch PS actuated | |
| Relay 1CR actuated | |
| Relay 2CR actuated | |
| Solenoid ① actuated | |
| Solenoid ② actuated | |
| Cylinder actuated | |
| Air blown off | |

# FIG.6

| | |
|---|---|
| Cam C1 actuated | |
| Cam C2 actuated | |
| Cam C3 actuated | |
| Limit switch 1LS | |
| Limit switch 2LS | |
| Limit switch 3LS | |
| Pressure switch PS actuated | |
| Relay 1CR actuated | |
| Relay 2CR actuated | |
| Solenoid ① actuated | |
| Solenoid ② actuated | |
| Cylinder actuated | |
| Air blown off | |

## FIG.7

## FIG.8

## FIG.9

(a)

(b)

(c)

(d)